Europäisches Patentamt

European Patent Office

Office européen des brevets

(19)

(11) Publication number: **0 372 345 B1**

# EUROPEAN PATENT SPECIFICATION

(12)

(45) Date of publication of patent specification: **06.04.94**  (51) Int. Cl.⁵: **G02F 1/37**, G02B 27/42

(21) Application number: **89121851.3**

(22) Date of filing: **27.11.89**

(54) **Light source device.**

(30) Priority: **05.12.88 JP 307611/88**

(43) Date of publication of application:
**13.06.90 Bulletin 90/24**

(45) Publication of the grant of the patent:
**06.04.94 Bulletin 94/14**

(84) Designated Contracting States:
**DE FR GB**

(56) References cited:
**US-A- 2 759 393**

**PATENT ABSTRACTS OF JAPAN, vol. 12, no. 220 (P-720)[3067], 23rd June 1988; & JP-A-63 15 235**

**PATENT ABSTRACTS OF JAPAN, vol. 12, no. 243 (P-728)[3090], 9th July 1988; & JP-A-63 33 716**

(73) Proprietor: **SUMITOMO ELECTRIC INDUS-TRIES, LTD.**
**5-33, Kitahama 4-chome,**
**Chuo-ku**
**Osaka-shi, Osaka 541(JP)**

(72) Inventor: **Umegaki, Shinsuke**
4-15, Chiyogaoka 9-chome
Aso-ku
Kawasaki-shi Kanagawa(JP)
Inventor: **Uemiya, Takafumi Osaka Works of Sumitomo Electric**
**Industries, Ltd.**
1-3, Shimaya 1-chome
Konohana-ku
**Osaka-shi Osaka(JP)**
Inventor: **Uenishi, Naota Osaka Works of Sumitomo Electric**
**Industries, Ltd.**
1-3, Shimaya 1-chome
Konohana-ku
**Osaka-shi Osaka(JP)**
Inventor: **Shimizu, Yo Osaka Works of Sumitomo Electric**
**Industries, Ltd.**
1-3, Shimaya 1-chome
Konohana-ku
**Osaka-shi Osaka(JP)**

(74) Representative: **Patentanwälte Grünecker, Kinkeldey, Stockmair & Partner**
**Maximilianstrasse 58**
**D-80538 München (DE)**

# Description

## BACKGROUND OF THE INVENTION

### Field of the Invention:

The present invention is directed to a light source device capable of creating second harmonic waves and in turn transforming the waves into parallel beams of light. The second harmonic waves are generated using laser beams passed through a second harmonic wave generating element.

### Description of the Related Art:

In a second harmonic wave generating element of the optical waveguide path type, however, the second harmonic waves radiate from the optical waveguide unit having a given width towards the substrate, so that no desirable wave surface characteristics are exhibited. Namely, the second harmonic waves are composed of groups of parallel beams of light showing a surface symmetry, and hence there is such a defect that the beams of light can not be converged at a small spot. As a result, it has been difficult, until now, to apply the second harmonic waves to writing to an optical storage medium such as a photo disk having minute pits and reading from the optical storage medium.

In contrast, the second harmonic wave generating element of the optical fiber type exhibits an axial symmetry, and therefore these second harmonic waves are expanded in a ring-like configuration. It is expected that favorable convergence characteristics are provided.

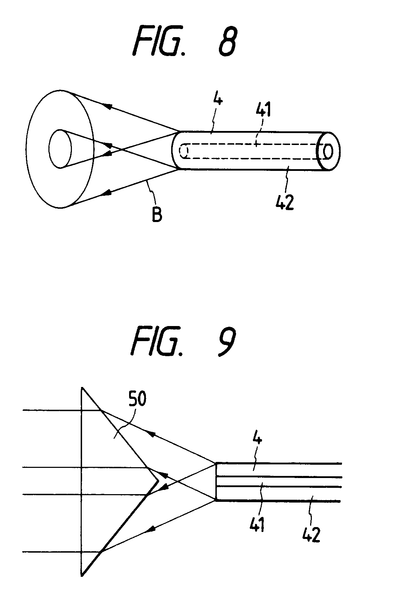

To be specific, the second harmonic waves emerging from the second harmonic wave generating element of the optical fiber type have equiphase surfaces each assuming a conical shape. FIGURE 8 depicts this feature. The second harmonic waves expand to form a conical beam B via a clad 42 of an optical fiber 4. For the purpose of converting beam B into parallel beams of light, as illustrated in FIGURE 9, a conical collimator lens 50 can be employed.

Since the conical collimator lens 50 has a considerable thickness, it is difficult to apply to a small-sized light source device and the handling and adjustment thereof are inconvenient and cumbersome. An additional problem is that the light source device can not satisfactorily be miniaturized.

Second harmonic generation in an optical fibre is shown in JP-A-63-15235, where the cladding of the fibre is tapered towards the output end of the fibre to obtain a small second harmonic light spot for improved focusing quality. Collimation of light emitted from an optical fibre employing a micro-Fresnel lens is shown in JP-A-63-33716.

## SUMMARY OF THE INVENTION

A non-linear optical effect may be understood as a phenomenon wherein polarization of a medium is proportional to terms having a higher-order than the square of the electric field of the light incident upon the medium. This phenomenon permits generation of the second harmonic waves by the medium.

An element having such a medium is referred to as a non-linear optical element. Inorganic materials such as $KH_2PO_4$, $LiNbO_3$ and the like are often utilized. Much attention has recently been paid to organic materials represented by 2-methyl-4-nitroaniline (MNA), because these materials have a large non-linear optical constant.

Where the non-linear optical element is used as a second harmonic wave generating element, the second harmonic wave generating element for use comes under an optical waveguide type. An arrangement of the optical waveguide type consists of an elongated optical waveguide unit through which the light travels while being confined therein and which is formed on a substrate, and an overlayer is convered thereon. An optical waveguide path is required to have a structure adaptable to a propagation phase velocity of the second harmonic waves in order to propagate the second waves generated in the optical waveguide unit or the like. Namely, the optical waveguide path has to match in phase with the second harmonic waves. A wide variety of methods are available for obtaining this phase conformity. The simplest method of obtaining the phase conformity may involve the use of the Cerenkov radiation system.

The Cerenkov radiation system is arranged in such a way that if the second harmonic waves, which are, as illustrated in FIGURE 7, generated from the light travelling through an optical waveguide unit 11 at a point A, leak into an overlayer 13 as well as into a substrate 12 at an angle $\theta$, the second harmonic waves radiate in a range defined by the angle $\theta$ when equi-phase surfaces of the second harmonic waves again leak in a $\theta$-directon at a point B after a unit time has passed coinciding with equi-phase surfaces of the above-mentioned second harmonic waves. Let $n_s(w)$ be the refractive index of the substrate 12 or the overlayer 13 to fundamental waves, let $n_G(w)$ be the refractive index of the waveguide unit 11, and let $n_s(2w)$ be the refractive index of the substrate 12 or the overlayer 13 to the second harmonic waves. The phase conformity can automatically be attained and the Cerenkov radiation can also be effected on a condition that the following require-

ment is satisfied:

$$n_s(2w) > n_G(w) > n_s(w)$$

Hence, the Cerenkov radiation is adopted as a system capable of obtaining the phase conformity in the simplest manner.

It is a primary object of the present invention to provide a light source device capable of creating second harmonic waves generated from incident laser light on a second harmonic wave generating element whose output is easy to condense. This facilitates the handling and adjustment of the present invention and allows further miniaturization of the configuration.

To accomplish the above-described object, according to one aspect of the invention, there is provided a collimating second harmonic generating light source device according to claim 1.

The collimating optical element has an annular diffracting pattern arranged such that respective oblique surfaces of said diffracting pattern are formed in concentric circles at equal spacings, the oblique surfaces partially constituting side surfaces of a plurality of conical bodies concentric with the concentric circles.

According to the light source device based on the above-described construction, the laser beams emitted from the laser source are led to the optical fiber type second harmonic wave generating element, wherein the second harmonic waves are generated. The second harmonic waves are changed into waves exhibiting an axial symmetry and having equi-phase surfaces each assuming a conical shape, thus expanding from an end surface of an optical fiber.

When causing the second harmonic waves to pass through a plurality of diffraction lattices concentrically disposed at equal spacings, the second harmonic waves are converted into parallel beams of light of a predetermined degree by diffractive action of the diffracting pattern. In this case, respective oblique surfaces of the diffracting pattern constitute side surfaces of the conical bodies, whereby the parallel beams of light radiate in a well-separated state from beams of light of other degrees.

## BRIEF DESCRIPTION OF THE DRAWING

The present invention will now be described with reference to the attached Figures in which:

FIGURE 1 is a block diagram showing one embodiment of a collimating second harmonic generating light source device;

FIGURE 2(a) is a front elevational view depicting a configuration of a collimating optical element;

FIGURE 2(b) is a sectional view of the element shown in FIGURE 2(a) taken along the line b-b;

FIGURE 3 is a view to assist in explaining the state of the second harmonic beams entering the collimating optical element and also the behaviour of the beams;

FIGURES 4 - 6 are views showing possible variations of the collimating optical elements;

FIGURE 7 is a diagram explaining a Cerenkov radiation system;

FIGURE 8 is a view illustrating beams which radiate from an optical fiber; and

FIGURE 9 is a view showing an example of the prior art where beams of light are condensed by a conical lens.

## DETAILED DESCRIPTION OF THE PRESENTLY PREFERRED EXAMPLARY EMBODIMENT

An embodiment of the present invention will be described with reference to the accompanying drawings.

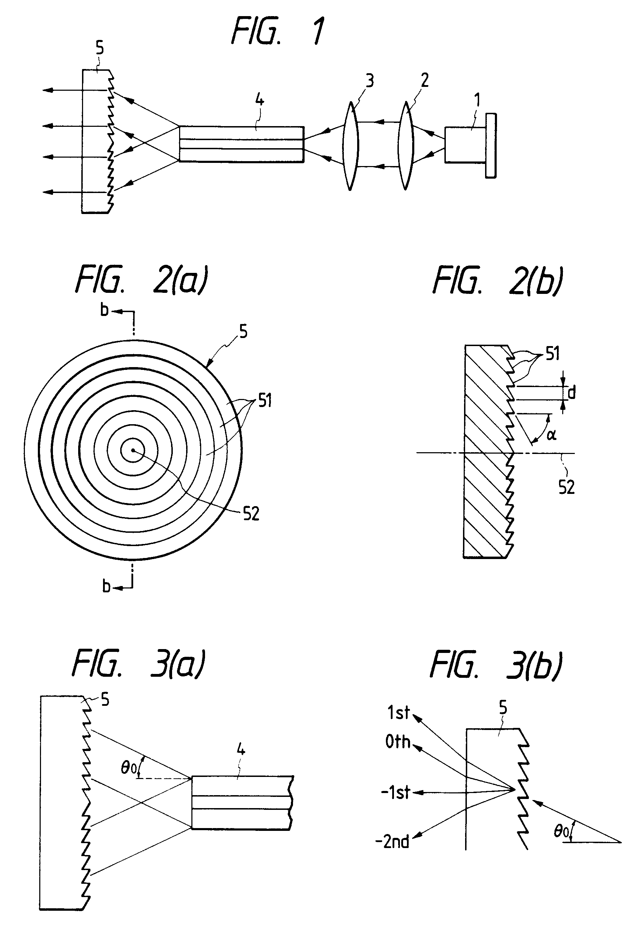

Turning first to FIGURE 1, there is illustrated a collimating second harmonic generating light source device composed of: a laser light source 1 such as a semiconductor laser or the like; a spherical lens 2 for collimating laser beams emitted from the laser light source 1; a condensing spherical lens 3 for condensing the parallel beams of light; an optical fiber type secondary higher harmonic wave generating element 4 including a core 41 formed of a known non-linear optical material such as an MNA and a clad 42 formed of glass; and a collimating optical element 5 for collimating the second harmonic waves generated from the optical fiber type second harmonic wave generating element 4. An optical axis of the collimating optical element is disposed to coincide with a symmetric axis of the optical fiber type second harmonic wave generating element 4. An arrangement of the collimating optical element 5 is that a thin glass substrate is, as illustrated in FIGURE 2, concentrically incised with a plurality of annular diffracting patterns having pitch d. Oblique surfaces 51 of the diffracting patterns are rectilinearly shaped to respectively have a given angle as shown in FIGURE 2(b) cut along a central axis 52 of the concentric circle. In other words, suppose that a plurality of conical bodies are formed to have the same vertical angle with respect to the central axis 52, the oblique surfaces 51 are arranged to partially constitute side surfaces of these conical bodies, wherein α is the angle made by the oblique surface 51 of the diffracting pattern and by the central axis 52.

In the thus constructed collimating second harmonic generating light source device, the second harmonic waves emerging from the optical fiber type second harmonic wave generating element 4 are, as depicted in FIGURE 3(a), incident on the collimating optical element 5 at a given angle $\theta_0$ to a symmetric axis (major axis) of the optical fiber 4, thereby generating, as illustrated in FIGURE 3(b), 1st, 0th, -1st and -2nd diffractive beams of light by means of diffraction.

To convert, e.g., the -1st light into a parallel beam of light, the pitch d of the diffracting patterns is set to satisfy the following diffraction formula:

$$\sin \theta_0 = \lambda / d$$

In order to have the -1st light at an angle suitable for separating the -1st light well from beams of light of other degrees, an inclined angle $\alpha_0$ of the diffraction lattice surface may be equalized to or approximate an angle $\alpha_0$ which satisfies the following formula:

$$\tan \alpha_0 = (n - \cos \theta_0) / \sin \theta_0$$

where n is the glass refractive factor. It is to be noted that the inclined angles of the respective diffracting patterns do not necessarily strictly coincide with each other. There is no problem if these angles are different from each other on condition that they approximate $\alpha_0$.

Thus, the parallel beams of light can be emitted from the collimating optical element 5. These beams of light are condensed by a well-known condensing means, thus obtaining a small spot which substantially matches with a light wavelength limit.

The collimating optical element 5 is constructed by forming the annular pattern on the glass substrate and can therefore be formed thin without difficulty. In addition to this advantage, the collimating optical element 5 enables miniaturization of the collimating second harmonic generating light source device as a whole.

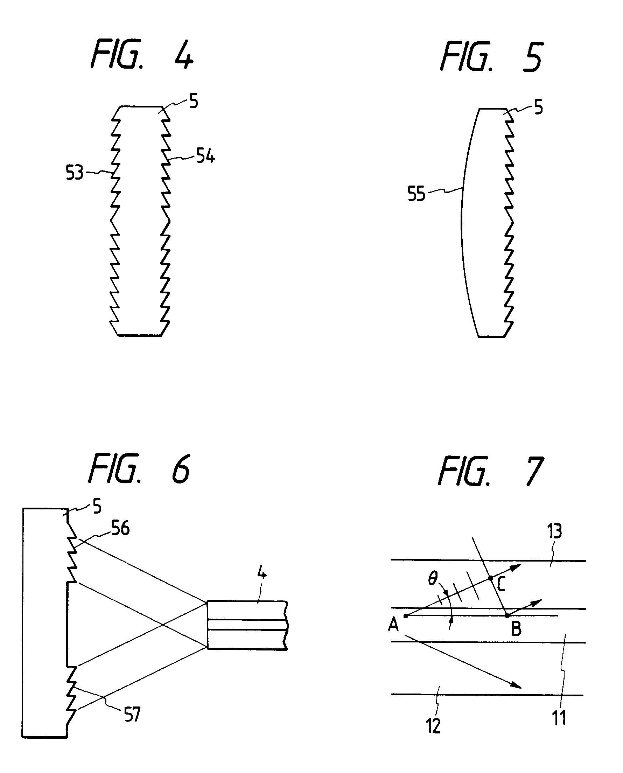

Note that the collimating optical element 5 is not limited to the above-described configuration. For instance, the collimating optical element may assume such a configuration that diffracting patterns 53 and 54 are, as depicted in FIGURE 4, provided on both surfaces of the element. With this arrangement, the pitch d of the diffracting pattern can be widened. Advantageously, this in turn facilitates processing of the diffracting pattern and is conducive to an improvement of processing accuracy.

One surface may be formed, as illustrated in FIGURE 5, in a spherical shape 55, thereby obtaining an optical element in which the diffracting pattern for collimating the beams of light and a convex lens for condensing the beams of light are combined.

The diffracting patterns are not necessarily provided on the entire surface of the collimating optical element 5. As shown in FIGURE 6, the pattern may be formed only on portions 56 and 57 which admit the second harmonic waves. A variety of modifications in design can be effected without departing from the essence of the present invention.

In the collimating second harmonic generating source device of the invention, the optical fiber type second harmonic wave generating element emits the second harmonic waves that exhibit axial symmetry and have conical equi-phase surfaces. The second harmonic waves pass through the collimating optical element having the diffracting pattern in which the diffracting pattern elements concentrically formed at equal spacings, and the oblique surfaces thereof constitute the side surfaces of a plurality of conical bodies, the central axis of which is common to that of the concentric circles. Thus, it is possible to acquire the parallel beams of light which are well separated from beams of light of other degrees.

Hence, the beams of light can be converged to a small spot, and the collimator lens can also be formed thin. This is advantageous in that the present invention has an application particularly as a small-sized collimating second harmonic light source device.

While the invention has been described in connection with what is presently considered to be the most practical and preferred embodiment, it is to be understood that the invention is not to be limited to the disclosed embodiment, but is intended to cover various modifications and equivalent arrangements.

## Claims

1. A collimating second harmonic generating (SHG) light source device comprising:
   a laser light source (1);
   an optical fibre (4) capable of generating second harmonic light due to the Cerenkov effect from an admitted incident laser beam emitted from said laser light source (1); and
   a collimating optical element (5) for converting said second harmonic light emerging from said second harmonic generating optical fibre into parallel beams of light, **characterised in that** the output end of said optical fibre is formed such that said second harmonic light exiting from said optical fibre (4) has an annular cone shape characteristic; said collimating optical element (3) has a planar diffracting structure (51) consisting of annular oblique surfaces arranged in concentric circles at equal radial spacings, each said oblique surface forming the exterior surface of a truncated cone.

2. The apparatus as claimed in claim 1, wherein said diffracting structure is formed in a concentric ring-shaped area (56,57) about a centre axis (52) of the collimating optical element.

3. The apparatus as claimed in claim 1, wherein said collimating optical element has a spherical output side (55) for focusing the second harmonic beams to a small spot.

4. The apparatus as claimed in claim 1, wherein said collimating optical element has a diffracting structure on both an input (54) and an output side (53) for widening a pitch of the diffracting structure.

5. The apparatus as claimed in claim 1, wherein said collimating optical element has a centre (52) aligned with the optic axis of the fibre.

6. The apparatus as claimed in claim 1, further comprising:
a collimating spherical lens (2) for collimating the light emitted from the laser source; and
a condensing spherical lens (3) for condensing the collimated light onto the optical fibre.

7. The apparatus as claimed in claim 1, wherein said laser source (1) is a semiconductor laser.

**Patentansprüche**

1. Eine kollimierende, eine zweite Harmonische erzeugende (SHG) Lichtquellenvorrichtung mit:
einer Laserlichtquelle (1);
einer optischen Faser (4), die aufgrund des Cerenkov-Effekts Licht der zweiten Harmonischen aus einem eingetretenen, von der Laserlichtquelle (1) emittierten einfallenden Laserstrahl erzeugen kann; und
einem kollimierendem optischen Element (5) zum Umwandeln des Lichts der zweiten Harmonischen, das aus der die zweite Harmonische erzeugenden optischen Faser austritt, in parallele Lichtstrahlen, **dadurch gekennzeichnet**, daß das Ausgangsende der optischen Faser derart ausgebildet ist, daß das aus der optischen Faser (4) austretende Licht der zweiten Harmonischen eine ringförmige, konische Formcharakteristik aufweist; daß das kollimierende optische Element (3) eine ebene Beugungsstruktur (51) aufweist, die aus ringförmigen, schrägen Flächen besteht, die als konzentrische Ringe mit gleicher radialer Beabstandung angeordnet sind, wobei die schrägen Flächen die äußere Oberfläche eines Kegelstumpfes bilden.

2. Die Vorrichtung nach Anspruch 1, wobei die Beugungsstruktur in einem konzentrischen, ringförmigen Bereich (56, 57) um eine zentrale Achse (52) des kollimierenden optischen Elements ausgebildet ist.

3. Die Vorrichtung nach Anspruch 1, wobei das kollimierende optische Element eine sphärische Ausgangsseite (55) zum Fokussieren der Strahlen der zweiten Harmonischen zu einem kleinen Punkt aufweist.

4. Die Vorrichtung nach Anspruch 1, wobei das kollimierende optische Element eine Beugungsstruktur sowohl auf einer Eingangs- (54) als auch an einer Ausgangsseite (53) zum Aufweiten einer Periode in der Beugungsstruktur aufweist.

5. Die Vorrichtung nach Anspruch 1, wobei das kollimierende optische Element ein mit der optischen Achse der Faser ausgerichtetes Zentrum (52) aufweist.

6. Die Vorrichtung nach Anspruch 1, die weiter umfaßt:
eine kollimierende sphärische Linse (2) zum Kollimieren des von der Laserlichtquelle emittierten Lichts; und
eine sphärische Kondensorlinse (3) zum Kondensieren des kollimierten Lichts auf die optische Faser.

7. Die Vorrichtung nach Anspruch 1, wobei die Laserlichtquelle (1) ein Halbleiterlaser ist.

**Revendications**

1. Dispositif de source de lumière générant un harmonique d'ordre deux (SHG) de collimation, comprenant :
une source de lumière laser (1) ;
une fibre optique (4) pouvant générer une lumière d'harmonique d'ordre deux du fait de l'effet Cerenkov à partir d'un faisceau laser incident reçu émis depuis ladite source de lumière laser (1) ; et
un élément optique de collimation (5) pour convertir ladite lumière d'harmonique d'ordre deux émergeant de ladite fibre optique de génération d'harmonique d'ordre deux selon des faisceaux parallèles de lumière,
caractérisé en ce que l'extrémité de sortie de ladite fibre optique est formée de telle sorte que ladite lumière d'harmonique d'ordre deux sortant de ladite fibre optique (4) présente une caractéristique de conformation conique annulaire ; ledit élément optique de collimation (3) présente une structure de diffraction plane (51) constituée par des surfaces obliques annulaires agencées selon des cercles concentriques selon des espacements radiaux équidistants, chaque dite surface oblique formant la surface externe d'un cône tronqué.

2. Appareil selon la revendication 1, dans lequel ladite structure de diffraction est formée selon une zone conformée en anneau concentrique (56, 57) autour d'un axe central (52) de l'élément optique de collimation.

3. Appareil selon la revendication 1, dans lequel ledit élément optique de collimation comporte un côté de sortie sphérique (55) pour focaliser les faisceaux d'harmonique d'ordre deux selon un petit spot.

4. Appareil selon la revendication 1, dans lequel ledit élément optique de collimation comporte une structure de diffraction sur à la fois un côté d'entrée (54) et un côté de sortie (53) pour élargir un pas de la structure de diffraction.

5. Appareil selon la revendication 1, dans lequel ledit élément optique de collimation comporte un centre (52) aligné avec l'axe optique de la fibre.

6. Appareil selon la revendication 1, comprenant en outre :
    une lentille sphérique de collimation (2) pour collimater la lumière émise depuis la source laser ; et
    une lentille sphérique de condensation (3) pour condenser la lumière collimatée sur la fibre optique.

7. Appareil selon la revendication 1, dans lequel ladite source laser (1) est un laser semiconducteur.

FIG. 1

FIG. 2(a)

FIG. 2(b)

FIG. 3(a)

FIG. 3(b)

## FIG. 4

## FIG. 5

## FIG. 6

## FIG. 7

# FIG. 8

# FIG. 9